Europäisches Patentamt

European Patent Office

Office européen des brevets

(19)

(11) Veröffentlichungsnummer: **0 378 799**

**A1**

(12) # EUROPÄISCHE PATENTANMELDUNG

(21) Anmeldenummer: 89122622.7

(22) Anmeldetag: 07.12.89

(51) Int. Cl.5: **C09J 153/00,** //(**C09J153/00, 133:04**)

(30) Priorität: 16.12.88 DE 3842327

(43) Veröffentlichungstag der Anmeldung:
25.07.90 Patentblatt 90/30

(84) Benannte Vertragsstaaten:
DE ES FR GB IT

(71) Anmelder: **Beiersdorf Aktiengesellschaft**
**Unnastrasse 48**
**D-2000 Hamburg 20(DE)**

(72) Erfinder: **Kramer, Jürgen, Dr.**
**Stieglitzweg 30**
**D-2107 Rosengarten(DE)**
Erfinder: **Kehler, Harald, Dr.**
**Bussestrasse 1**
**D-2000 Hamburg 60(DE)**
Erfinder: **Zimmermann, Dieter**
**Drosselstieg 8**
**D-2155 York(DE)**
Erfinder: **Junghans, Adreas**
**Wendloher Weg 15**
**D-2000 Hamburg 20(DE)**

(54) **Klebstoff für reversibles Verkleben.**

(57) Klebstoff für reversibles Verkleben, enthaltend
a) ein wasserdispergierbares thermoplastisches Blockcopolymer,
b) eine wässrige selbstklebende thermoplastische Dispersion, insbesondere Acrylatdispersion,
c) Dispergierhilfsmittel, und
d) ggf. weitere übliche Zusätze.

EP 0 378 799 A1

## Klebstoff für reversibles Verkleben

Klebstoffe zur Herstellung permanenter Verklebung haben sich heute beim Verbraucher durchgesetzt und werden sowohl im Büro als auch im Haushalt in vielfältiger Weise eingesetzt, in Form von Pasten, Emulsionen, Lösungen aber auch von Stiften.

In vielen Fällen ist es jedoch wünschenswert, eine einmal durchgeführte Verklebung wieder zu lösen und an anderer Stelle ohne weiteren Klebstoffauftrag wiederherstellen zu können.

Das Anforderungsprofil an einen derartigen Klebstoff umfaßt heute diverse Parameter, wie

- Lösungsmittelfrei
- Zerstörungsfrei lösbare Verklebungen
- Rückstandsfrei lösbare Klebungen
- Wiederverklebbar ohne neue Beschichtung
- Nicht papierdurchfettend bzw. verfärbend
- Mindest-Lagerfähigkeit 1 Jahr.

Von den bisher bekannten Klebstoffen zur Herstellung reversibler Verklebung kann keiner das obige Anforderungsprofil vollständig erfüllen. Denn entweder enthalten sie organische Lösungsmittel, oder sie verlieren ihre Selbstklebrigkeit und hinterlassen starke Massenrückstände auf dem Substrat, etwa gemäß US-Patent 4.684.685. Zum anderen sind sie derartig anfällig gegen Alterung, daß sie das zu verklebende Papierstück durchfetten.

Aufgabe der vorliegenden Erfindung war es, hier Abhilfe zu schaffen, insbesondere einen lösungsmittelfreien Klebstoff für reversibles Verkleben zu schaffen, der das obige Anforderungsprofil weitestgehend erfüllt.

Dieses obige Anforderungsprofil läßt sich erfindungsgemäß durch die Kombination der Eigenschaften eines thermoplastischen Blockcopolymeren insbesondere vom Styrol und/oder von Polyurethanblockcopolymeren (TPU's) mit den Eigenschaften einer selbstklebenden thermoplastischen Dispersion z.B. vom Typ Acrylatdispersion erfüllen.

Demgemäß betrifft die Erfindung einen Klebstoff, wie er im einzelnen in den Ansprüchen gekennzeichnet ist.

Das darin verwendete Blockcopolymer führt zum einen dazu, daß sich ein Stift durch einen weichen Abrieb auszeichnet, der genügend Substanz zum Auftrag kommen läßt. Zum anderen verleiht es aufgrund seiner mikromorphologischen Segmentstruktur der aufgetragenen Klebschicht genügende Kohäsion, die eine rückstandsfreie Lösung der Klebung ermöglicht.

Das Verhältnis der kohäsiven und der adhäsiven Komponenten kann dabei so eingestellt werden, daß das Anforderungsprofil erfüllt wird. Bevorzugt werden die in den Ansprüchen genannten Verhältnisse gewählt und besonders geeignet sind erfindungsgemäße Klebstoffe mit folgenden Mengenverhältnissen, bezogen auf die Gesamtklebstoffmasse:

2 - 30, insbes. 4 - 15 Gew.-% Blockcopolymer,

55 - 20, insbes. 50 - 25 Gew.-% Acrylat

1 - 4, insbes. 1 - 2 Gew.-% Dispergierhilfsmittel

15 - 80, insbes. 35 - 70 Gew.-% Wasser.

Soll der erfindungsgemäße Kleber als Stift verwendet werden, so wird vorteilhaft ein Gerüstbilder zusätzlich verwendet, insbesondere ein Seifengerüst, wie Natriumstearat, ggf. mit geringen Anteilen Natriumhydroxid, wobei Mengen von 2 - 8, insbes. 3 - 5 Gew.-% Gerüstbilder, bevorzugt Natriumstearat, bezogen auf die Gesamtklebstoffmasse verwendet werden.

Geeignete wasserdispergierbare, thermoplastische Blockcopolymere sind z.B. SBS, SIS, SEBS und segmentierte Blockcopolymere auf Polyurethanbasis, insbesondere Polyesterurethan.

Geeignete wässrige Acrylatdispersionen sind z.B. Copolymere von EHA, BA, EA mit AS (EHA ist Ethylenhexylacrylat; BA ist Butylacrylat; EA ist Ethylacrylat; AS ist Acrylsäure)

Geeignete Dispergierhilfsmittel sind z.B. aromatische Polyglycolether, Na-Salz eines Fettsäurekondensationsproduktes.

Geeignete weitere übliche Zusätze sind z.B. Alterungsschutzmittel, Weichmacher, Entschäumer.

| Beispiel 1 | |
|---|---|
| | Gew.-Teile |
| Acrylatdispersion (anionische Dispersion eines carboxylgruppenhaltigen Acrylsäurecopolymers in Wasser, weichmacherfrei, 69 Gew.-%, wässrig, Dichte 1,01 g/cm³, pH-Wert 3,5 - 4,5) | 59,0 |
| PU - Dispersion (anionische aliphatische Polyesterurethandispersion emulgatorfrei, 40 Gew.-%, wässrig, Dichte 1,1 g/cm³, pH-Wert 6,5-7,5) | 19,0 |
| Emulgator (SE 210) | 3,0 |
| Natriumstearat | 4,0 |
| Natriumhydroxid | 0,5 |
| Wasser | 14,0 |

**Ansprüche**

1. Klebstoff für reversibles Verkleben, enthaltend
   a) ein wasserdispergierbares thermoplastisches Blockcopolymer,
   b) eine wässrige selbstklebende thermoplastische Dispersion, insbesondere Acrylatdispersion,
   c) Dispergierhilfsmittel, und
   d) ggf. weitere übliche Zusätze.

2. Klebstoff nach Anspruch 1, enthaltend auf 1 Gew.-Teil des Blockcopolymeren 0,5 - 5, insbesondere 2 - 4 Gew.-Teile des Acrylats.

3. Klebstoff nach Anspruch 1, enthaltend 2 - 30, insbesondere 4 - 15 Gew.-% des Blockcopolymeren, bezogen auf die Gesamtklebstoffmasse.

4. Klebstoff nach Anspruch 1, enthaltend als Blockcopolymer ein Styrol- und/oder Polyurethanblockcopolymer.

5. Klebstoff nach Anspruch 4, enthaltend als Blockcopolymer eine wässrige SEBS-Dispersion.

6. Klebstoff nach Anspruch 1 in Stiftform, enthaltend zusätzlich ein Seifengerüst, insbesondere Natriumstearat.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 233 685 (LINGNER & FISCHER GmbH) <br> * Ansprüche; Beispiele * <br> ----- | 1 | C 09 J 153/00 // (C 09 J 153/00 C 09 J 133:04 ) |

RECHERCHIERTE
SACHGEBIETE (Int. Cl.5)

C 09 J
C 08 L

Der vorliegende Recherchenbericht wurde für alle Patentansprüche erstellt

| Recherchenort | Abschlußdatum der Recherche | Prüfer |
|---|---|---|
| DEN HAAG | 19-03-1990 | WILSON A.J.D. |